(19) **Europäisches Patentamt / European Patent Office / Office européen des brevets**

(11) **EP 4 742 407 A1**

(12) # EUROPEAN PATENT APPLICATION

(43) Date of publication:
**13.05.2026 Bulletin 2026/20**

(21) Application number: **25210267.8**

(22) Date of filing: **22.10.2025**

(51) International Patent Classification (IPC):
**H01M 50/403** (2021.01)   **H01M 50/423** (2021.01)
**H01M 50/429** (2021.01)   **H01M 50/446** (2021.01)
**H01M 50/451** (2021.01)

(52) Cooperative Patent Classification (CPC):
**H01M 50/451; H01M 50/403; H01M 50/423;
H01M 50/4295; H01M 50/446**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 KR 20240156756**

(71) Applicant: **SK IE Technology Co., Ltd.
Seoul 03161 (KR)**

(72) Inventors:
• **YUN, Cheol Min**
  **34124 Daejeon (KR)**
• **KIM, Dong Jae**
  **34124 Daejeon (KR)**
• **OH, Eun Ji**
  **34124 Daejeon (KR)**
• **JUNG, Hee Joon**
  **34124 Daejeon (KR)**

(74) Representative: **Prüfer & Partner mbB
Patentanwälte · Rechtsanwälte
Sohnckestraße 12
81479 München (DE)**

(54) **COMPOSITE SEPARATOR AND ELECTROCHEMICAL DEVICE INCLUDING THE SAME, AND METHOD FOR PRODUCING THE SAME**

(57)    Provided is a composite separator including: a porous substrate, and a ceramic layer which is formed on one or both surfaces of the substrate and includes inorganic particles and a binder, wherein the binder includes polyacrylamide and carboxymethyl cellulose having a weight average molecular weight of 180,000 g/mol or more and a degree of substitution of 0.6 to 1.2 at a weight ratio of 60 to 90: 40 to 10. The composite separator may satisfy all of excellent mechanical and thermal stability and excellent ion conduction properties.

FIG. 1

EP 4 742 407 A1

## Description

### TECHNICAL FIELD

The following disclosure relates to a separator, an electrochemical device including the same, and use of the electrochemical device. The present disclosure also relates to a method of manufacturing a composite separator, and to a use of a binder having certain characteristics in a ceramic layer to be disposed on a porous substrate.

### BACKGROUND

In recent years, as an electrochemical device gradually has a higher capacity and higher output, there is a growing demand for securing heat resistance and safety, and in particular, to this end, the required performance for a separator acting as a very important element is being advanced.

For example, as a method for securing heat resistance and safety of a separator, a composite separator to which a coating layer including inorganic particles such as alumina ($Al_2O_3$), silica ($SiO_2$), and zirconia ($ZrO_2$), as well as a binder on a porous substrate is introduced has been established as an important technology. Recently, research is conducted aiming for thinning of the separator for the high capacity and high output characteristics of an electrochemical device. Yet, since a conventional binder applied to a composite separator does not have sufficient adhesive strength to both the substrate and the inorganic particles, e.g. between the substrate and the ceramic layer; and the inorganic particles among each other, as the thickness of the inorganic particle coating layer, i.e. a ceramic layer, is thinner, mechanical strength and/or heat resistance of the seperator decrease.

Though studies for solving the problem are continuing, a binder material having improved heat resistance has somewhat insufficient adhesive strength, or when the adhesive strength of the separator is intended to be improved, properties such as air permeability and interfacial resistance are deteriorated and device performance is degraded. Thus, new binders in the ceramic layer are required for improved heat resistance and adhesive strength of the separator at a small thickness.

[Related Art Documents]

[Patent Document]

Korean Patent Laid-Open Publication No. 10-2015-0071453A

### SUMMARY

An embodiment of the present invention is directed to providing a composite separator including: a porous substrate; and a ceramic layer which is formed on one or both surfaces of the porous substrate and has pores formed between inorganic particles which are connected and fixed by a binder, wherein the composite separator has both excellent heat resistance and adhesive strength by employing a specific binder with the inorganic particles of the ceramic layer. Surprisingly, this can be achieved even though the thickness of the ceramic layer in the separator is thin, as disclosed herein.

Another embodiment of the present invention is directed to providing an electrochemical device having excellent battery performance and safety by employing the composite separator.

In one general aspect, a composite separator includes: a porous substrate; and a ceramic layer which is formed on one or both surfaces of the substrate and includes inorganic particles and a binder, wherein the binder includes polyacrylamide and carboxymethyl cellulose having a weight average molecular weight of 180,000 g/mol or more and a degree of substitution of 0.6 to 1.2 at a weight ratio of 60 to 90: 40 to 10.

The carboxymethyl cellulose may have the weight average molecular weight of 180,000 to 1,500,000 g/mol.

The carboxymethyl cellulose may have the degree of substitution of 0.7 to 1.0.

The polyacrylamide may have a weight average molecular weight of 150,000 to 250,000 g/mol.

The composite separator according to an exemplary embodiment may include 0.1 to 10 parts by weight of the binder with respect to 100 parts by weight of the inorganic particles.

The inorganic particles may have an average particle diameter (D50) of 0.1 to 1.0 $\mu$m.

The inorganic particles may be one or two or more selected from boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

The porous substrate may be hydrophilically surface-treated. Specifically, the porous substrate may comprise at least one polar functional group introduced through hydrophilic surface treatment, the polar functional group being selected from any one or more of a carboxyl group, an aldehyde group, a hydroxyl group, a carbonyl group, an amino group. The hydrophilic surface treatment may preferably be a corona discharge treatment or a plasma discharge treatment, or a combination thereof.

The total thickness of the ceramic layer may be 0.5 $\mu$m to 10 $\mu$m. Preferably, the total thickness of the ceramic layer may be more than 0.5 $\mu$m and less than 5 $\mu$m. More preferably, the total thickness of the ceramic layer may be more than 0.5 $\mu$m and less than 3 $\mu$m.

The composite separator according to an exemplary embodiment may have heat shrinkage rates in MD and TD directions which are measured after the composite separator is allowed to stand at 150°C for 60 minutes, of both 4% or less.

When the composite separator according to an exemplary embodiment is subjected to a cardboard test and a degree of foreign matter smeared on a surface of a cardboard is evaluated, a ratio of an area occupied by the smeared foreign matter to an area of the cardboard may be 5% or less:

[Cardboard test]

a black cardboard and a rubber pad having a size of 2 cm $\times$ 10 cm are sequentially placed on a ceramic layer of a composite separator specimen having a size of 5 cm $\times$ 10 cm, the cardboard is pulled out horizontally at a speed of 0.1 m/s for a distance of 60 mm while a force of 10 N is applied to the rubber pad using a pressing device, and a degree of foreign matter smeared on the surface of the cardboard is tested.

In another general aspect, a method for manufacturing a composite separator includes: applying a composition for forming a ceramic layer including a binder and inorganic particles on one or both surfaces surface of a porous substrate and drying the composition to form a ceramic layer, wherein the binder includes polyacrylamide and carboxymethyl cellulose having a weight average molecular weight of 180,000 g/mol or more and a degree of substitution of 0.6 to 1.2 at a weight ratio of 60 to 90: 40 to 10.

The composition for forming a ceramic layer has a viscosity of 300 to 5,000 mPa·s, or 800 to 1500 mPa·s, when the solid mass % thereof is 25 %.

The surface of the porous substrate is treated with a corona discharge treatment or a plasma discharge treatment before applying the composition for forming a ceramic layer.

In still another general aspect, the present disclosure provides a use of carboxymethyl cellulose having a weight average molecular weight of 180,000 to 280,000 g/mol and a degree of substitution of 0.6 to 1.2 in combination with polyacrylamide as a binder together with inorganic particles for the formation of a ceramic layer on one or both surfaces a porous substrate, optionally to produce a separator.

The use according to this aspect can achieve improved technical effects, such as excellent adhesive strength between inorganic particles in the ceramic layer as well as adhesive strength between the interfaces of the substrate and the ceramic layer, and further excellent heat resistance, and effectively suppressing a heat shrinkage phenomenon.

The improved adhesive strength can be determined by providing a porous substrate on whose one or both surface(s) the ceramic layer is(are) formed, and then according to an exemplary embodiment this formed composite substrate is subjected to the correspondingly performed cardboard test and a degree of foreign matter smeared on a surface of a cardboard is evaluated, a ratio of an area occupied by the smeared foreign matter to an area of the cardboard may be 5% or less, specifically 4% or less, 3% or less, or 2.5% or less, respectively measured at an ambient temperature.

The improved heat shrinkage suppression can be determined by providing a porous substrate on whose one or both surface(s) the ceramic layer is(are) formed, and then according to an exemplary embodiment this formed composite substrate is subjected to a heat shrinkage test wherein the composite substrate has heat shrinkage rates in the machine direction (MD) and the transverse direction (TD), which are measured after the composite substrate is allowed to stand at 150°C for 60 minutes, of both 4% or less.

In still another general aspect, an electrochemical device includes a positive electrode, a negative electrode, and the composite separator of this disclosure.

The electrochemical device may be a secondary lithium battery.

In still another general aspect, the electrochemical device may be used in electric vehicles, battery charging stations, and solar power generations and wind power generations.

Other features and aspects will be apparent from the following detailed description, the drawings, and the claims.

## BRIEF DESCRIPTION OF THE DRAWINGS

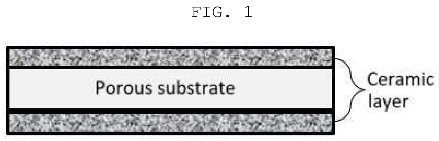

FIG. 1 shows a cross section of a composite separator according to an exemplary embodiment.

## DETAILED DESCRIPTION OF EMBODIMENTS

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "include", "equipped", "contain", or "have" does not mean the exclusion of any other constituent element, but mean further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

In the present specification, "average particle diameter" refers to "D50", and "D50" refers to a particle diameter of an inorganic particle corresponding to 50% in terms of a volume-based integrated fraction. The average particle diameter may be derived from particle size distribution results obtained by collecting a sample of inorganic particles to be measured via laser diffraction in accordance with the standard of ISO 13320-1 and performing analysis using S3500 available from MICROTRAC. In addition, "D90" refers to a particle diameter of a particle corresponding to 90% in the volume-based integrated fraction, and "D10" refers to a particle diameter of an inorganic particle corresponding to 10% in a volume-based integrated fraction. D90 and D10 may be derived in the same manner as D50.

In the present specification, carboxymethyl cellulose (CMC) refers to a cellulose derivative which is etherized by substituting a hydroxyl group (-OH) of cellulose with $-OCH_2COOH$ and/or $-OCH_2COO^-M^+$ in which $M^+$ is an alkali metal cation and may be selected from lithium (Li), sodium (Na), potassium (K), rubidium (Rb), cesium (Cs), and francium (Fr). In the present specification, a "degree of substitution (DS)" of carboxymethyl cellulose refers to the average number of the substituents per one anhydrous glucose unit in a cellulose molecule, which may be measured by a known or conventional method, for example, may be measured in accordance with ASTM D1439 and/or calculated by $^1$H-NMR or $^{13}$C-NMR analysis.

The degree of substitution (DS) of carboxymethyl cellulose (CMC) was measured according to a titration method based on ASTM D1439. The experiment was carried out using a magnetic stirrer, aspirator, dry oven, 300 mL beaker, pipette, 250 mL Erlenmeyer flask, and Petri dish. The reagents used included 80% ethanol, 100% ethanol, 0.1 N sodium hydroxide (NaOH), phenolphthalein indicator, and 0.1 N sulfuric acid ($H_2SO_4$). Specifically, 150 mL of 80% ethanol was added to a 300 mL beaker, followed by 10 mL of 1 N nitric acid ($HNO_3$). Approximately 1-2 g of CMC sample was introduced into the beaker and stirred for 1 hour to convert the sodium salt form of CMC into the acid form (CMC-acid). After allowing the mixture to stand for about 10-20 minutes, the supernatant was decanted. Then, 150 mL of 80% ethanol was added again and stirred for 30-40 minutes, followed by decanting the supernatant once more. The precipitated CMC-acid was filtered using an aspirator and washed with 500 mL of 80% ethanol, followed by one or two washes with 100% ethanol. The central portion of the CMC-acid was collected in a clean weighing dish and dried in a dry oven for 20-30 minutes. After drying, approximately $0.2 \pm 0.05$ g of the dried sample was weighed accurately, and 25 mL of 0.1 N NaOH solution was added. The sample solution was then transferred to a 250 mL Erlenmeyer flask containing 100 mL of distilled water and stirred for 40-60 minutes until completely dissolved. Two to three drops of phenolphthalein were added as an indicator, and the solution was titrated with 0.1 N $H_2SO_4$ while stirring until the color changed from red to colorless. The number of millimoles of CMC-acid per gram of dried sample (A) was determined according to the following equation:

$$A = \frac{\text{(millimoles of CMC Acid)}}{\text{Sample dry weight (g)}}$$

The degree of substitution (DS) was then calculated from A using the following equation:

$$B \text{ (D.S. value)} = \frac{162 \times A}{10,000 - 58 \times A}$$

.

Hereinafter, the present disclosure will be described in detail. However, it is only illustrative, and the present disclosure is not limited to the specific exemplary embodiment which is illustratively described.

The present disclosure provides a composite separator which may secure excellent mechanical and thermal stability and excellent ion conduction properties simultaneously.

**EP 4 742 407 A1**

Specifically, the composite separator according to an exemplary embodiment includes: a porous substrate; and a ceramic layer which is formed on one or both surfaces of the substrate and includes inorganic particles and a binder, wherein the binder includes polyacrylamide and carboxymethyl cellulose having a weight average molecular weight of 180,000 g/mol or more and a degree of substitution of 0.6 to 1.2 at a weight ratio of 60 to 90: 40 to 10.

Since a binder in which the carboxymethyl cellulose satisfying a combination of the weight average molecular weight and the degree of substitution described above and polyacrylamide are mixed at a specific ratio is applied to the composite separator according to an exemplary embodiment, the composite separator may have excellent adhesive strength between the inorganic particles and between the inorganic particles (and thus the coating layer formed by the ceramic layer) and the substrate and also excellent heat resistance. In addition, the composite separator according to an exemplary embodiment may implement excellent adhesive strength and heat resistance even when the ceramic layer is formed at a very small thickness, and also, an electrochemical device employing the composite separator may achieve improved operational safety, a high capacity, and high output characteristics simultaneously.

In an exemplary embodiment, the carboxymethyl cellulose may have a weight average molecular weight of 180,000 g/mol or more, 190,000 g/mol or more, 200,000 g/mol or more and 2,000,000 g/mol or less, 1,800,000 g/mol or less, 1,500,000 g/mol or less, 1,300,000 g/mol or less, or 1,000,000 g/mol or less, and specifically, 180,000 to 2,000,000 g/mol, 180,000 to 1,500,000 g/mol, 180,000 to 1,300,000 g/mol, or 200,000 to 1,000,000 g/mol, and may include all possible combinations of the upper limits and the lower limits of the numerical ranges. The weight average molecular weight of the carboxymethyl cellulose may refer to a weight average molecular weight converted with a molecular weight calibration curve using a polysaccharide standard sample measured by a GPC method. The GPC method may be carried out at an ambient temperature, and the sample is prepared by dissolving CMC at a concentration of approximately 0.1% w/v in a standard reference solvent. The prepared solution is then injected into the GPC instrument for analysis.

In addition, the carboxymethyl cellulose may have the degree of substitution of 0.6 to 1.2, 0.6 to 1.1, 0.6 to 1.0, 0.7 to 1.2, 0.7 to 1.1, 0.7 to 1.0, 0.8 to 1.2, 0.8 to 1.1, 0.8 to 1.0, 0.9 to 1.2, 0.9 to 1.1, or 0.9 to 1.0, and may include all possible combinations of the upper limits and the lower limits of the numerical ranges. By using the carboxymethyl cellulose satisfying the combination of the weight average molecular weight and the degree of substitution range, an effect of improving heat resistance and adhesive strength simultaneously may be further improved. In addition, applicability when applying a coating slurry on the surface of the porous substrate when forming the ceramic layer is excellent, heat resistance is improved even at a small thickness of the ceramic layer on the composite separator, and adhesive strength between the inorganic particles among each other and/or between the ceramic layer and the porous substrate is also improved.

In an exemplary embodiment, the polyacrylamide (PAAm) may be a homopolymer including 100 mol% of an acrylamide polymerization unit. When the polyacrylamide is a copolymer which further includes a polymerization unit derived from monomers other than acrylamide, for example, a copolymerization unit selected from a vinylalcohol unit, an acrylonitrile unit, and an acrylic acid unit, a side reaction with a positive electrode, a negative electrode, an electrolytic solution, and the other undesirable reactions are caused to degrade battery performance. Therefore, it is most preferred to use a polyacrylamide homopolymer, but a content of the copolymerization unit which may tolerate performance degradation may be acceptable, and for example, the copolymerization unit may be used with a limitation of 5 mol% or less, 3 mol% or less, 1 mol% or less, 0.5 mol% or less, or 0.1 mol% or less.

The polyacrylamide may have a weight average molecular weight of 100,000 g/mol or more, 150,000 g/mol or more, 180,000 g/mol or more, or 200,000 g/mol or more and 500,000 g/mol or less, 400,000 g/mol or less, 300,000 g/mol or less, or 250,000 g/mol or less, and specifically, 100,000 g/mol to 300,000 g/mol, 150,000 to 250,000 g/mol, or may include all possible combinations of the upper limits and the lower limits of the numerical ranges, but is not limited thereto. The weight average molecular weight of the polyamide may refer to a weight average molecular weight converted with a molecular weight calibration curve using a polystyrene standard sample measured by a GPC method.

In an exemplary embodiment, the type of inorganic particles may be used without limitation as long as it is commonly used in the art, and as a non-limiting example, may be one or two or more selected from metal oxides, metal hydroxide, metal carbides, metal nitrides, and metal carbonitrides, such as boehmite, (y-AlO(OH)), pseudo-boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

In an exemplary embodiment, the inorganic particles may have an average particle diameter (D50) of, for example, 0.01 $\mu$m or more, 0.02 $\mu$m or more, 0.05 $\mu$m or more, 0.1 $\mu$m $\mu$m or more and 0.01 $\mu$m to 10 $\mu$m, 0.02 $\mu$m to 5.0 $\mu$m, 0.1 $\mu$m to 3.0 $\mu$m, 0.1 $\mu$m to 2.0 $\mu$m, 0.1 $\mu$m to 1.0 $\mu$m, or 0.1 $\mu$m to 0.5 $\mu$m, or may include all possible combinations of the upper limits and the lower limits of the numerical ranges, but is not limited thereto.

In an exemplary embodiment, the ceramic layer may include 90 to 99.9 wt%, 92 to 99.5 wt%, or 92 to 99 wt% of the inorganic particles with respect to the total weight of the ceramic layer, and when compared with the content of the inorganic particles in a conventional coating layer formed by connecting inorganic particles including the binder, more inorganic particles may be included, but since heat resistance and thermal stability are excellent, the coating layer (ceramic layer) may be formed at a smaller thickness.

In an exemplary embodiment, the ceramic layer may use the binder - i.e. the total amount of all binder materials

5

including the polyacrylamide and the specific carboxymethyl cellulose disclosed herein, and optionally other further conventional common binder materials - at 10 parts by weight or less, 8 parts by weight or less, 5 parts by weight or less, 3 parts by weight or less, 2 parts by weight or less, or 1 part by weight or less and 0.1 parts by weight or more, 0.5 parts by weight or more, 1 part by weight or more, 2 parts by weight or more, specifically 0.1 to 5 parts by weight, 1 to 5 parts by weight, or 1 to 3 parts by weight, with respect to 100 parts by weight of the inorganic particles, or at a content between the numerical ranges.

The binder may use the combination of polyacrylamide and the specific carboxymethyl cellulose disclosed herein at 70 wt% or more, 80 wt% or more, 90 wt% or more, 95 wt% or more, or 100 wt%, with respect to the total weight of the binder. Preferably, the combination of polyacrylamide and the specific carboxymethyl cellulose may be used alone (100 wt%), which is advantageous.

In an exemplary embodiment, heat shrinkage rates in MD and TD directions of the composite separator which is measured after the separator is allowed to stand at 150°C for 60 minutes may be both 5% or less, specifically 3% or less, 2.5% or less, or 2.0% or less, respectively measured at an ambient temperature.

In addition, in an exemplary embodiment, when a degree of foreign matter smeared on the surface of a cardboard is evaluated after a cardboard test of the composite separator, a ratio of an area occupied by the smeared foreign matter to an area of the cardboard may be 5% or less, specifically less than 5%, less than 4%, less than 3%, less than 2%, or less than 1.5%.

The cardboard test method involves placing a black cardboard and a rubber pad having a size of 2 cm × 10 cm sequentially on an upper surface of a ceramic layer of a composite separator specimen having a size of 5 cm × 10 cm, and pulling out the cardboard horizontally at a speed of 0.1 m/s for a distance of 60 mm in a state of applying a force of 10 N to the rubber pad using a pressing device to evaluate an area as a degree of foreign matter smeared on the surface of the cardboard, in which the foreign matter may be the constituent components of the ceramic layer, for example, the inorganic particles, the binder, or a combination thereof.

When the adhesive strength is evaluated using the cardboard test method as described above, measurement may be performed considering adhesive strength between the inorganic particles in the ceramic layer as well as adhesive strength between interfaces of the substrate and the ceramic layer, and from the results of the adhesive strength test (notably by the cardboard test), a heat shrinkage degree may be predicted more accurately as compared with a conventional peel test; the adhesive strength between the inorganic particles by the binder may also be reflected by the cardboard test. That is, when a ratio of an area occupied by the smeared foreign matter calculated by the cardboard test is less than 5%, less than 4%, less than 3%, less than 2%, or less than 1.5%, it means that adhesive strengths between the inorganic particles each other and between the inorganic particle coating layer, i.e. the ceramic layer and the substrate are all excellent, and the heat shrinkage phenomenon may be effectively suppressed, since the inorganic particles are fixed with the binder.

As an example, a method such as a peeling test used for evaluating adhesive strength of an inorganic particle coating layer, a ceramic layer, in a conventional composite separator is for evaluating adhesive strength between interfaces of the substrate and the inorganic particle coating layer, a ceramic layer, and the adhesive strength between the inorganic particles among each other is difficult to be predicted, and the heat shrinkage characteristics of the separator may not be accurately predicted with the evaluated value.

In an exemplary embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, teflon, and/or polytetrafluoroethylene, and any two or more of them may be used. Among the porous substrates, a porous film is manufactured by a dry method or a wet method and known in the art, and thus, will not be described any more.

In an exemplary embodiment, the porous substrate may have a porosity of 20 to 60%, 30 to 60%, 30 to 50%, or 35 to 45%, but is not limited thereto.

In an exemplary embodiment, the porous substrate may have a polar functional group introduced by performing a hydrophilic surface treatment, the polar functional group may be one or more selected from a carboxyl group, an aldehyde group, a hydroxyl group, and other common polar functional groups, and the hydrophilic surface treatment may be, as an example, a corona discharge treatment or a plasma discharge treatment, or a combination thereof, but is not limited thereto. Specifically, the corona surface treatment may be performed at a speed of 3 to 20 mpm (meter per minute) and the power density may be in a range of 0.5 to 5.0 W/mm, more preferably in a range of 0.5 to 2.0 W/m$^2$ and even more preferably may be 2.0 W/m$^2$. This treatment may additionally improve the adhesive strength of between the ceramic layer and the porous substrate, and may be chosen according to surface property of the porous substrate.

In an exemplary embodiment, the thickness of the porous substrate is not particularly limited, and for example, may be 1 μm to 100 μm, 1 μm to 50 μm, 1 μm to 30 μm, 5 μm to 20 μm, or any value between the numerical values.

In an exemplary embodiment, the ceramic layer may be coated on one or both surfaces of the porous substrate, and when the ceramic layer is coated on both surfaces of the porous substrate, the thicknesses of the ceramic layer coated on one surface and the other surface may be the same as or different from each other. Though it is not particularly limited, the total thickness of the ceramic layer according to an exemplary embodiment may be, for example, 0.1 μm to 10.0 μm, 0.5 μm to 10.0 μm, 1 μm to 10 μm, 1 μm to 8 μm, 1 μm to 5 μm, about 1.5 μm to 5 μm, 2 μm to 5 μm, 2 μm to 4 μm, 2 μm to 3 μm, 2 μm to 2.5 μm or a value between the numerical values. Since the composite separator according to an exemplary embodiment may implement excellent adhesive strength and heat resistance even when the ceramic layer is formed at a very small thickness, an electrochemical device employing the separator may satisfy safety, a high capacity, and high output characteristics simultaneously.

Another exemplary embodiment of the present disclosure provides a use of carboxymethyl cellulose having a weight average molecular weight of 180,000 to 280,000 g/mol and a degree of substitution of 0.6 to 1.2 in combination with polyacrylamide as a binder for the formation of a layer on one or both surfaces a porous substrate, optionally to produce a separator. The binder is advantageously used in combination with inorganic particles to form a ceramic layer.

The use according to this aspect can achieve improved technical effects, such as excellent adhesive strength between inorganic particles in the ceramic layer as well as adhesive strength between the interfaces of the substrate and the ceramic layer, and further excellent heat resistance, and effectively suppressing a heat shrinkage phenomenon.

Another exemplary embodiment of the present invention provides a method for manufacturing a composite separator, and the method for manufacturing a composite separator includes: applying a composition for forming a ceramic layer including a binder and inorganic particles on one or both surfaces surface of a porous substrate and drying the composition to form a ceramic layer, wherein the binder includes polyacrylamide and carboxymethyl cellulose having a weight average molecular weight of 180,000 g/mol or more and a degree of substitution of 0.6 to 1.2 at a weight ratio of 10 to 40: 90 to 60.

Since the porous substrate, the binder, and the inorganic particles are as described above, detailed description will be omitted.

The composition for forming a ceramic layer may be prepared by dispersing the binder and the inorganic particles and/or by adding a dispersing agent, and the agglomerated inorganic particles may be deagglomerated/dispersed using a ball mill for instance. The dispersing agent is not limited to a specific compound, and may be used if it does not make an impact on the separator performance.

The composition for forming a ceramic layer further includes a solvent, and the solvent may be water; lower alcohols such as ethanol, methanol, propanol, and isopropanol; solvents such as dimethylformamide, acetone, tetrahydrofuran, diethyl ether, methylene chloride, N-ethyl-2-pyrrolidone, hexane, and cyclohexane; or a mixture thereof, but is not necessarily limited thereto.

In an exemplary embodiment, though a solid content of the composition for forming a ceramic layer is not particularly limited, it may be, for example, 1 to 50 wt%, 5 to 30 wt%, or 10 to 30 wt%, but is not limited thereto. In addition, the composition for forming a ceramic layer may have a viscosity based on a solid content of 25 wt% of 300 to 5,000 mPa·s, 800 to 5,000 mPa·s, 800 to 4,000 mPa·s, 800 to 3,000 mPa·s, 1,000 to 3,000 mPa·s, or 300 to 1500 mPa·s at which it may be easier to form the ceramic layer, and an effect of improving heat resistance and adhesive strength of the separator may be better.

In an exemplary embodiment, though a method for applying or coating the composition for forming a ceramic layer on the porous substrate is not particularly limited, for example, roll coating, pin coating, dip coating, bar coating, die coating, slit coating, or inkjet printing may be used.

In an exemplary embodiment, the drying may be performed by drying by warm air, hot air, or low-humidity air, vacuum drying, or irradiation with far infrared rays, electron beams, or the other drying methods. Since the drying temperature is not particularly limited, it may be appropriately adjusted depending on the experimental environment or the purpose, and for example, may be 30°C to 120°C, 30°C to 100°C, 50°C to 80°C, or 50°C to 70°C. The drying time is not particularly limited, but may be 30 seconds to 300 seconds, 60 seconds to 300 seconds, 100 seconds to 300 seconds, 150 seconds to 250 seconds, or about 180 seconds.

Another exemplary embodiment of the present invention provides an electrochemical device including the composite separator according to an exemplary embodiment, and the electrochemical device may be, as an example, a lithium secondary battery.

Specifically, the electrochemical device includes a positive electrode, a negative electrode, and a composite separator, wherein the composite separator includes a porous substrate, and a ceramic layer which is formed on one or both surfaces of the substrate and includes inorganic particles and a binder, and the binder includes polyacrylamide and carboxymethyl cellulose having a weight average molecular weight of 180,000 g/mol or more and a degree of substitution of 0.6 to 1.2 (the DS being measured as the average number of substituents per one anhydrous glucose unit as defined above) at a weight ratio of 10 to 40: 90 to 60.

Hereinafter, the electrochemical device according to an exemplary embodiment will be described using a lithium secondary battery as an example, but it may be manufactured with a structure known in the art using a common manufacturing method and common materials in the art, of course, except for including the composite separator according to an exemplary embodiment.

As an example, the lithium secondary battery may be manufactured according to a common manufacturing method of placing a negative electrode, the separator, and a positive electrode, assembling them, and injecting an electrolyte to complete the battery.

[Positive electrode]

The positive electrode may include a positive electrode current collector and a positive electrode mixed layer on at least one surface of the positive electrode current collector, the positive electrode may be manufactured by forming the positive electrode mixed layer by applying a positive electrode material slurry on one or both surfaces of the positive electrode current collector, drying, and rolling, and the positive electrode material slurry may include a positive electrode active material and a binder, and if necessary, may further include an electrically and/or ionically conductive material, a thickening agent, a surfactant, and the other additives typical in the field of electrode manufacturing.

The positive electrode current collector may include a stainless steel, nickel, aluminum, titanium, or an alloy thereof, and may include aluminum or a stainless steel which is surface-treated with carbon, nickel, titanium, or silver. The thickness of the positive electrode current collector may be, for example, 10 $\mu$m to 50 $\mu$m, but is not limited thereto.

The positive electrode active material is a compound capable of reversibly intercalating and deintercalating lithium ions and may be used without limitation as long as it is commonly used in the art, and as a non-limiting example, it may be a composite oxide of lithium with a metal selected from cobalt (Co), manganese (Mn), nickel (Ni), iron (Fe), niobium (Nb), magnesium (Mg), copper (Cu), zinc (Zn), molybdenum (Mo), tantalum (Ta), tungsten (W), aluminum (Al), or a combination thereof.

In an exemplary embodiment, the positive electrode active material may be a lithium-nickel composite oxide, and the lithium-nickel composite oxide may further include one or two or more selected from cobalt, manganese, and aluminum.

In an exemplary embodiment, the positive electrode active material may include a lithium nickel-cobalt-manganese (NCM)-based composite oxide, and though the composition of the metal is not particularly limited, a high capacity (high-Ni) composition having a high nickel content may be used, and the content of Ni in the NCM-based lithium oxide (for example, a mole fraction of nickel of the total moles of nickel, cobalt, and manganese) may be 0.3 or more, 0.4 or more, 0.5 or more, 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95. The NCM-based composite oxide may be, for example, $LiNi_{0.33}Co_{0.33}Mn_{0.33}O_2$, $LiNi_{0.4}Co_{0.2}Mn_{0.4}O_2$, $LiNi_{0.5}Co_{0.2}Mn_{0.3}O_2$, $LiNi_{0.6}Co_{0.2}Mn_{0.2}O_2$, $LiNi_{0.7}Co_{0.15}Mn_{0.15}O_2$, $LiNi_{0.8}Co_{0.1}Mn_{0.1}O_2$, and other NCM-based mixed composite oxides of formula $Li_aNi_xCo_yMn_zO_2$, in which x + y + z = 1, but is not limited thereto.

In an exemplary embodiment, the positive electrode active material may be, for example, lithium cobalt oxide-based, lithium manganese oxide-based, lithium nickel oxide-based, lithium iron phosphate-based (LFP, for example, $LiFePO_4$), lithium manganese phosphate-based (for example, $LiMnPO_4$), lithium cobalt phosphate-based (for example, $LiCoPO_4$), lithium iron pyrophosphate-based (for example, $Li_2FeP_2O_7$) materials, and the like.

The positive electrode binder is not particularly limited as long as it is commonly used in the art, may include a nonaqueous binder and/or an aqueous binder or include a rubber-based binder and/or a fluorine-based binder, and for example, may be one or two or more selected from acryl-based polymers such as polyacrylate, polymethacrylate, polybutylacrylate, and polyacrylonitrile, fluorine-based polymers such as polyvinylidene fluoride, polyhexafluoropropylene, polyvinylidene fluoride-hexafluoropropylene, and polyvinylidene fluoride-trichloroethylene, polyvinyl acetate, polyethylene oxide, cellulose, modified cellulose, polyamide, polyacrylamide, rubber, elastomer, and other latex binders suitable as a positive electrode binder, but is not limited thereto.

The conductive material may be added for increasing conductivity of the positive electrode mixed layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as $LaSrCoO_3$ and $LaSrMnO_3$, and other electron and/or ion conductive inorganic compounds, but is not limited thereto. As used herein, the term "dot-shaped conductive material" refers to a general spherical or particulate form of conductive material.

[Negative electrode]

The negative electrode may include a negative electrode current collector and a negative electrode mixed layer on at least one surface of the negative electrode current collector, the positive electrode may be manufactured by forming the negative electrode mixed layer by applying a negative electrode material slurry on one or both surfaces of the positive electrode current collector, drying, and rolling, and the negative electrode material slurry may include a negative electrode active material and a binder, and if necessary, may further include an electrically and/or ionically conductive material, a thickening agent, a surfactant, and the other common additives in the field of electrode manufacturing.

The negative electrode current collector may include a copper foil, a nickel foil, a stainless steel foil, a titanium foil, a nickel foam, a copper foam, a polymer substrate coated with a conductive metal, and other transition metal based substrates such as stainless steel felt or nickel felt. A thickness of the negative electrode current collector may be, for example, 10 $\mu$m to 50 $\mu$m, but is not limited thereto.

The negative electrode active material is a material capable of adsorbing and desorbing lithium ions and may be used without limitation as long as it is commonly used in the art, and as a non-limiting example thereof, carbon-based materials such as crystalline carbon, amorphous carbon, a carbon composite, and carbon fiber; lithium metal; lithium alloy; silicon (Si)-containing materials, tin (Sn)-containing materials, and other mono- or multimetallic alloys may be used.

An example of the amorphous carbon may include hard carbon, soft carbon, coke, mesocarbon microbeads (MCMB), mesophase pitch-based carbon fibers (MPCF), and other nanostructured carbon-based materials, and an example of the crystalline carbon may include graphite-based carbon such as natural graphite, artificial graphite, graphitized coke, graphitized MCMB, and graphitized MPCF.

An element included in the lithium alloy may include aluminum, zinc, bismuth, cadmium, antimony, silicon, lead, tin, gallium, indium, boron, germanium, and/or a transition metal.

The silicon-containing material may provide more increased capacity characteristics. The silicon-containing material may include Si, $SiO_x$ ($0<x\leq2$), metal-doped $SiO_x$ ($0<x\leq2$), a silicon-carbon composite, and other Si-based composites doped with one or more main group or transition metals, the metal may include lithium and/or magnesium, and the metal-doped $SiO_x$ ($0<x\leq2$) may include a metal silicate. The materials described above which may be used in manufacture of the positive electrode may be used as the binder, the conductive material, and the thickening agent of the negative electrode.

The negative electrode binder is not particularly limited as long as it is commonly used in the art, and may be rubber-based binders such as a styrene-butadiene rubber (SBR)-based binder, carboxymethyl cellulose (CMC), polyacrylic acid, poly(3,4 ethylenedioxythiophene) (PEDOT)-based binders, and other polymers such as polyvinylidene fluoride (PVDF) or poly(hydroxybutyrate-co-hydroxyvalerate) (PHBV).

[Electrolyte]

In an exemplary embodiment, the electrolyte may be a nonaqueous electrolytic solution, and the nonaqueous electrolytic solution may include a lithium salt as an electrolyte and an organic solvent.

The lithium salt is represented by, for example, $Li^+X^-$, and an anion of the lithium salt ($X^-$) may be exemplified by $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and other single negatively charged ions.

The organic solvent sufficiently dissolves the lithium salt and the additive and may include an organic compound having no reactivity in a battery. The organic solvent may include, for example, at least one of carbonate-based solvents, ester-based solvents, ether-based solvents, ketone-based solvents, alcohol-based solvents, and aprotic solvents. The organic solvent may be, for example, one or two or more selected from propylene carbonate, ethylene carbonate, butylene carbonate, diethyl carbonate, dimethyl carbonate, ethyl methyl carbonate, methylpropyl carbonate, ethylpropyl carbonate, dipropyl carbonate, vinylene carbonate, methyl acetate, ethyl acetate, n-propyl acetate, 1,1-dimethylethyl acetate, methyl propionate, ethyl propionate, fluoroethyl acetate, difluoroethyl acetate, trifluoroethyl acetate, dibutylether, tetraethylene glycol dimethylether, diethylene glycol dimethylether, dimethoxyethane, tetrahydrofuran, 2-methyltetrahydrofuran, ethyl alcohol, isopropyl alcohol, dimethylsulfuroxide, acetonitrile, dimethoxyethane, diethoxyethane, sulfolane, $\gamma$-butyrolactone, propylene sulfite, and other low molecular weight and/or cyclic compounds.

Hereinafter, the exemplary embodiments described above will be described in detail through the following examples. However, the following examples are only for description, without being limited thereto.

The physical properties of the examples were measured as follows:

**1) viscosity**

A kinematic viscosity value of a composition for forming a ceramic layer (solid content: 25 wt%) was measured with a rotational rheometer (Discovery HR-20 available from TA) and a flat plate (HA aluminum available from TA, 60 mm plate) spindle having a diameter of 60 mm at a shear speed of 1 (1/s) under a temperature condition of 25°C and was set as a viscosity value. A sample was loaded on the plate, the spindle was set to a gap of 250 um, and the shear speed was increased from 1 (1/s) to 10000 (1/s) to measure the kinematic viscosity.

### 2) Thickness

A composite separator was laminated in 10 layers, the thickness was measured at ambient temperature and atmospheric pressure by Mitutoyo (ID-C112X) to derive an average thickness of the 10 layers of the composite separator, and the average thickness was divided by 10 again to determine the thickness of the composite separator. A value obtained by subtracting the thickness of a porous substrate (9 $\mu$m) from the thickness of the composite separator was set as the total thickness of the ceramic layer; the thickness of the porous substrate may be measured with the same method.

### 3) Adhesive strength

[Cardboard test]

A composite separator was cut into a size of 5 cm × 10 cm to prepare a specimen, and a black cardboard and a rubber pad having a size of 2 cm × 10 cm were placed sequentially on the ceramic layer of the composite separator specimen. The cardboard was pulled out horizontally at a speed of 0.1 m/s for a distance of 60 mm in a state of applying a pressure of 10 N to the rubber pad using a pressing device, adhesive strength was evaluated depending on a degree of foreign matter smeared on the surface of the cardboard, and the foreign matter may be constituent components of the ceramic layer, for example, inorganic particles, a binder, or a combination thereof.

[Evaluation of degree of smeared foreign matter]

After the cardboard test, the surface of the cardboard was photographed with an optical camera and imaged, and an area of the smeared foreign matter was measured. Specifically, an indirect lighting was installed with an LED lamp in the visible light range having a 60° slope, and the cardboard was photographed with a 640 M pixel optical camera at a height of 40 cm from the sample (cardboard). The photographed cardboard image was loaded with an Image J program, only an area through which the separator and the rubber pad were passed was selected and cut using a crop function, an image file format of the cut area was converted into a 8 bit image, and a Sharpen filter was applied to the image to adjust the brightness and the contrast of the image so that it is easy to distinguish between the cardboard and foreign matter, which was detached from the surface of the composite separator and appeared white or high brightness in color being clearly distinguishable on the black cardboard. A threshold was applied to the image to convert it into a binary image, an Analyze Particles function was executed to calculate a ratio of an area occupied by the (white or highly bright) foreign matter to the total area, and adhesive strength was evaluated based on the following criteria:

A: < 1.5%
B: 1.5% - 5%
C: > 5%

### 4) Heat shrinkage rate

The heat shrinkage rate of the composite separator was measured based on the ASTM D1204 standard, but the following method was used. Lattice points were marked at 2 cm intervals on a square with one side of 10 cm on the composite separator specimen, and one side of the square was the transverse direction (TD) and the other one was the machine direction (MD). The specimen was placed right in the center, 5 sheets of paper were placed on and under the specimen, respectively, the four sides of the paper were taped, and the taped specimen was allowed to stand in a hot air drying oven at 150°C for 60 minutes. Thereafter, the specimen was taken out, and the separator was observed with a camera to calculate the shrinkage rate in the machine direction (MD) and the shrinkage rate in the transverse direction (MD) at an ambient temperature, which are shown in the following Table 1.
MD heat shrinkage rate (%) = (length in MD before heating - length in MD after heating)/length in MD before heating × 100
TD heat shrinkage rate (%) = (length in TD before heating - length in TD after heating)/length in TD before heating × 100

### [Example 1]

2 parts by weight of 1,2-benzisothiazolin-3-one (DIO2) as a dispersing agent was mixed with 100 parts by weight of boehmite having an average particle diameter (D50) of 0.3 $\mu$m in water to prepare a slurry having a solid content of 45 wt%. The prepared slurry and a binder including carboxymethyl cellulose (CMC) having a weight average molecular weight of 200,000 g/mol and polyacrylamide (Mw 200,000 g/mol, Sigma Aldrich) at a weight ratio of 10:90 were mixed so that the binder (CMC:PAAm = 10:90 (weight ratio)) was included at 3 parts by weight with respect to 100 parts by weight of the boehmite, and the mixture was diluted with water so that a total solid content was 25 wt%, thereby preparing a composition for forming a ceramic layer.

Both surfaces of a polyethylene film having a thickness of 9 $\mu$m (porosity: 35%-45%, SKIET) were subjected to a corona discharge treatment (power density: 2 W/m$^2$) to introduce a surface polar group, and the corona surface treatment at this time was performed at a speed of 5 mpm (meter per minute). The composition for forming a ceramic layer was applied on both surfaces of the corona surface-treated polyethylene film, bar-coated, and dried at 50°C to manufacture a composite separator having ceramic layers at the same thickness formed on both surfaces.

**[Example 2]**

The process was performed in the same manner as in Example 1, except that CMC having a degree of substitution of 0.8 and a weight average molecular weight of 250,000 g/mol was used and a mixing ratio between CMC and PAAm was changed to a weight ratio of 40:60.

**[Example 3]**

The process was performed in the same manner as in Example 1, except that CMC having a degree of substitution of 1.0 and a weight average molecular weight of 300,000 g/mol was used.

**[Example 4]**

The process was performed in the same manner as in Example 1, except that CMC having a degree of substitution of 0.9 and a weight average molecular weight of 500,000 g/mol was used.

**[Example 5]**

The process was performed in the same manner as in Example 1, except that CMC having a degree of substitution of 0.9 and a weight average molecular weight of 1,000,000 g/mol was used.

**[Comparative Example 1]**

The process was performed in the same manner as in Example 1, except that a mixing ratio between CMC and PAAm was changed to a weight ratio of 50:50.

**[Comparative Example 2]**

The process was performed in the same manner as in Example 1, except that PAAm was used alone as the binder.

**[Comparative Example 3]**

The process was performed in the same manner as in Example 1, except that CMC having a degree of substitution of 0.9 and a weight average molecular weight of 150,000 g/mol was used.

**[Comparative Example 4]**

The process was performed in the same manner as in Example 1, except that CMC having a degree of substitution of 0.5 and a weight average molecular weight of 250,000 g/mol was used.

**[Comparative Example 5]**

The process was performed in the same manner as in Example 1, except that CMC having a degree of substitution of 1.3 and a weight average molecular weight of 250,000 g/mol was used.

[Table 1]

| | CMC | | CMC:PAAm (weight ratio) | Total thickness of ceramic layer ($\mu$m) | viscosity (mPa·s) | Adhesive strength | Heat shrinkage rate (%) | |
|---|---|---|---|---|---|---|---|---|
| | Molecular weight (g/mol) | Degree of substitutio n | | | | | MD | TD |
| Example 1 | 200,000 | 0.9 | 10:90 | 2.1 | 340 | B | 1.3 | 1.4 |
| Example 2 | 250,000 | 0.8 | 40:60 | 2.1 | 750 | B | 2 | 1.4 |
| Example 3 | 300,000 | 1.0 | 10:90 | 2.1 | 450 | B | 0.8 | 1.8 |
| Example 4 | 500,000 | 0.9 | 10:90 | 2.2 | 1,040 | B | 1.8 | 1.5 |
| Example 5 | 1,000,000 | 0.9 | 10:90 | 2.1 | 1,500 | B | 1.9 | 1.6 |
| Comparative Example 1 | 200,000 | 0.9 | 50:50 | 2.1 | 1,700 | C | 45 | 30 |
| Comparative Example 2 | - | - | 0:100 | 2.2 | 35 | C | 46 | 44 |
| Comparative Example 3 | 150,000 | 0.9 | 10:90 | 2.1 | 110 | C | 43 | 46 |
| Comparative Example 4 | 250,000 | 0.5 | 10:90 | 2.1 | 1100 | C | 2.5 | 3 |
| Comparative Example 5 | 250,000 | 1.3 | 10:90 | 2.1 | 620 | C | 3.4 | 4.5 |

Referring to Table 1, since the composite separator according to an exemplary embodiment of the present invention used a binder including carboxymethyl cellulose satisfying the weight average molecular weight of 180,000 g/mol or more and the degree of substitution of 0.6 to 1.2 simultaneously and polyacrylamide at a specific mixing ratio (weight ratio of 10 to 40: 90 to 60), it was found that the composite separator had excellent adhesive strength between inorganic particles in the ceramic layer as well as adhesive strength between the interfaces of the substrate and the ceramic layer, had excellent heat resistance, and effectively suppressed a heat shrinkage phenomenon, even though the thickness of the ceramic layer in the separator is sufficiently thin, i.e. for instance 2.1 $\mu$m. In addition, the electrochemical device employing the composite separator according to an exemplary embodiment may secure heat resistance and safety and may be favorable for having higher capacity and higher output.

Whereas the viscosity of the composition for forming a ceramic layer with solid 25 mass% in the examples 1 to 5 adopts 340 to 1500 mPa·s, that of the comparative examples 1 and 2 is lower than 300 mPa·s. In a case of the comparative examples 4 and 5, the degree of the substitution is out of the desirable range, e.g. 0.5 and 1.3, respectively. The viscosity of the composition may be affected by the molecular weight and the degree of the substitution in CMC; and weight ratio of CMC and PAAm.

On the other hand, the composite separators of Comparative Examples 1 to 5 which used CMC being out of the ranges of the weight average molecular weight and/or the degree of substitution or were out of the mixing ratio between CMC and PAAm had significantly deteriorated heat resistance of the ceramic layer and a greatly increased heat shrinkage rate, and also had reduced adhesive strength. Specifically, the comparative examples 1 and 2 have the weight ratio of CMC and PAAm out of the range, the molecular weight of CMC in the comparative example 3 is less than 180,000 g/mol, and the degrees of the substitution in the comparative examples 4 and 5 are out of the range, e.g. 0.5 and 1.3, respectively.

The composite separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and the other renewable energy-powered devices for preventing climate change by suppressing air pollution and greenhouse gas emissions.

The composite separator according to an exemplary embodiment may satisfy all of excellent mechanical and thermal stability and excellent ion conduction properties, especially enhanced Li ion mobility and/or conduction properties. Specifically, the composite separator according to an exemplary embodiment includes a porous substrate, and a ceramic layer having pores formed between inorganic particles which are connected and fixed by a binder, and it has excellent adhesive strength between the inorganic particles and between the inorganic particles (and thus the coating layer formed by the ceramic layer) and the substrate and may effectively suppress a desorption or delamination phenomenon of inorganic particles and a shrinkage phenomenon at a high temperature.

In addition, the composite separator according to an exemplary embodiment may implement excellent adhesive strength and heat resistance as compared with a conventional separator having a ceramic layer at the same thickness even when the ceramic layer is formed at a very small thickness, and also, an electrochemical device employing the separator may satisfy safety, a high capacity, and high output characteristics simultaneously. Particularly, enhanced Li ion mobility and/or Li ion conduction properties may be achieved by the composite separator according to an exemplary embodiment.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

Therefore, the present disclosure is not limited to the above-described exemplary embodiments.

## Claims

1. A composite separator comprising: a porous substrate; and a ceramic layer which is formed on one or both surfaces of the substrate and includes inorganic particles and a binder,
   wherein the binder includes polyacrylamide and carboxymethyl cellulose having a weight average molecular weight of 180,000 g/mol or more and a degree of substitution measured in accordance with ASTM D1439 of 0.6 to 1.2 at a weight ratio of 60 to 90: 40 to 10.

2. The composite separator of claim 1, wherein the carboxymethyl cellulose has the weight average molecular weight of 180,000 to 1,500,000 g/mol, and/or
   wherein the carboxymethyl cellulose has the degree of substitution of 0.7 to 1.0.

3. The composite separator of claim 1 or 2, wherein the polyacrylamide has a weight average molecular weight of 150,000 to 250,000 g/mol.

4. The composite separator of any one of claims 1 to 3, wherein 0.1 to 10 parts by weight of the binder is included with respect to 100 parts by weight of the inorganic particles.

5. The composite separator of any one of claims 1 to 4, wherein the inorganic particles have an average particle diameter (D50) of 0.1 to 1.0 $\mu$m, and/or
   wherein the inorganic particles are one or two or more selected from boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

6. The composite separator of any one of claims 1 to 5, wherein the porous substrate comprises at least one polar functional group introduced through hydrophilic surface treatment, optionally wherein the at least one polar functional group is selected from any one or more of a carboxyl group, an aldehyde group, a hydroxyl group, a carbonyl group, an amino group, preferably wherein the hydrophilic surface treatment is a corona discharge treatment or a plasma discharge treatment, or a combination thereof.

7. The composite separator of any one of claims 1 to 6, wherein a total thickness of the ceramic layer is 0.5 $\mu$m to 10 $\mu$m, preferably more than 0.5 $\mu$m and less than 5 $\mu$m, and more preferably more than 0.5 $\mu$m and less than 3 $\mu$m.

8. The composite separator of any one of claims 1 to 7, wherein the composite separator has one or both characteristics (i) and/or (ii) :

   (i) heat shrinkage rates in the machine direction (MD) and the transverse direction (TD) which are measured after the composite separator is allowed to stand at 150°C for 60 minutes, of both 4% or less;
   (ii) when the composite separator is subjected to a cardboard test and a degree of foreign matter smeared on a surface of a cardboard is evaluated, a ratio of an area occupied by the smeared foreign matter to an area of the cardboard is 5% or less:
   [Cardboard test]
   a black cardboard and a rubber pad having a size of 2 cm × 10 cm are sequentially placed on a ceramic layer of a composite separator specimen having a size of 5 cm × 10 cm, the cardboard is pulled out horizontally at a speed of 0.1 m/s while a force of 10 N is applied to the rubber pad using a pressing device, and a degree of foreign matter smeared on the surface of the cardboard is tested.

9.  A method for manufacturing a composite separator, the method comprising: applying a composition for forming a ceramic layer including a binder and inorganic particles on one or both surfaces of a porous substrate and drying the composition to form a ceramic layer,
    wherein the binder includes polyacrylamide and carboxymethyl cellulose having a weight average molecular weight of 180,000 g/mol or more and a degree of substitution of 0.6 to 1.2 at a weight ratio of 60 to 90: 40 to 10.

10. The method for manufacturing a composite separator in claim 9, the composition for forming a ceramic layer has a viscosity of 300 to 5,000 mPa·s or 800 to 1500 mPa·s, when the solid mass % thereof is 25 %.

11. The method for manufacturing a composite separator in claim 9 or 10, the surface of the porous substrate is treated with a corona discharge treatment or a plasma discharge treatment before applying the composition for forming a ceramic layer.

12. use of carboxymethyl cellulose having a weight average molecular weight of 180,000 to 280,000 g/mol and a degree of substitution of 0.6 to 1.2 in combination with polyacrylamide as a binder together with inorganic particles for the formation of a ceramic layer on one or both surfaces a porous substrate, optionally to produce a separator.

13. An electrochemical device comprising a positive electrode, a negative electrode, and a composite separator, wherein the composite separator is according to any one of claims 1 to 8.

14. The electrochemical device of claim 13, the electrochemical device is a secondary lithium battery.

15. Use of the electrochemical device according to claim 13 or 14 in electric vehicles, battery charging stations, and solar power generations and wind power generations.

FIG. 1

Porous substrate

Ceramic layer

Europäisches
Patentamt

European
Patent Office

Office européen
des brevets

# EUROPEAN SEARCH REPORT

**Application Number**

EP 25 21 0267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 345 063 A (HEFEI CHANGYANG NEW ENERGY TECH CO LTD) 27 June 2023 (2023-06-27) * the whole document * ----- | 1-15 | INV. H01M50/403 H01M50/423 H01M50/429 H01M50/446 H01M50/451 |
| A | CN 118 054 155 A (GEELY HOLDING GROUP CO LTD ET AL.) 17 May 2024 (2024-05-17) * the whole document * ----- | 1-15 | |
| A | CN 113 745 754 B (DONGFENG MOTOR GROUP CO LTD) 30 May 2023 (2023-05-30) * the whole document * ----- | 1-15 | |
| A | CN 116 706 437 A (SINOMA LITHIUM BATTERY SEPARATOR CO LTD ET AL.) 5 September 2023 (2023-09-05) * the whole document * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 13 February 2026 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0267

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | | Publication date | Patent family member(s) | Publication date |
|---|---|---|---|---|
| CN 116345063 | A | 27-06-2023 | NONE | |
| CN 118054155 | A | 17-05-2024 | NONE | |
| CN 113745754 | B | 30-05-2023 | NONE | |
| CN 116706437 | A | 05-09-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150071453 A